# EUROPÄISCHE PATENTSCHRIFT

(11) **EP 2 420 455 B1**
(45) Veröffentlichungstag und Bekanntmachung des Hinweises auf die Patenterteilung: **20.02.2013**
(21) Anmeldenummer: 11009164.2
(22) Anmeldetag: 23.09.2010
(51) Int. Cl.: B65D 47/18, B65D 47/20, A61F 9/00

(54) **Einwegventil zur Abgabe einer Flüssigkeit**
One-way valve for dispensing a liquid
Soupape anti-retour pour distribuer un liquide

(30) Priorität: 07.10.2009 DE 102009048476
(43) Veröffentlichungstag der Anmeldung: 22.02.2012
(62) Teilanmeldung aus: 10010268.0
(73) Patentinhaber: Gaplast GmbH, 82442 Altenau (DE)
(72) Erfinder: Kneer, Roland, 82490 Farchant (DE)
(74) Vertreter: Flosdorff, Jürgen

(56) Entgegenhaltungen:
- WO-A1-2008/015505
- GB-A- 2 260 535
- US-A- 3 010 619
- US-A- 5 033 647

## Beschreibung

Die Erfindung betrifft ein Einwegventil zur Abgabe einer Flüssigkeit aus einem Behälter, mit einer Außenkappe, die an dem Behälterhals befestigt ist und einen Austrittskanal für die Flüssigkeit aufweist.

Es sind zahlreiche Einwegventile dieser Art bekannt. Beispielsweise offenbart die EP 1 499 538 B1 ein Einwegventil, bei dem ein Ventilsitz in den Behälterhals eingesetzt ist, der von einem Ventilkörper aus elastischem Material überdeckt ist. Bei Ausübung eines Drucks auf den Behälter fließt Behälterinhalt zwischen einem Vorsprung des Ventilsitzes und dem Ventilkörper hindurch zu einer Austrittsöffnung einer Außenkappe, die dieses Einwegventil überdeckt.

WO 2008/015505 A1 offenbart ein Einwegventil gemäß dem Oberbegriff des Anspruchs 1 mit einem Anschlag, der aus längsgerichteten Rippen (Figur 2 der Druckschrift) am oberen Endbereich eines elastischen Ventilkörpers besteht, die in der vorgeschobenen Stellung des Ventilkörpers an die Innenwand einer Kappe angedrückt werden. Zwischen diesen Rippen verlaufen rinnenförmige Vertiefungen, durch die die Flüssigkeit zu der Austrittsöffnung der Kappe fließt. Dieser Anschlag unterbricht demnach nicht den Strom der Flüssigkeit zu und aus der Austrittsöffnung der Kappe.

GB 2 260 535 A offenbart ein Ventil mit einem elastischen Ventilkörper, der über in Umfangsrichtung gleichmäßig voneinander beabstandete flexible streifenförmige Stege mit einem ringförmigen Randbereich des Ventilkörpers verbunden ist. Die streifenförmigen Stege können in einer weit vorgeschobenen Öffnungsposition des Ventils an den inneren Randbereich einer Kappe anstoßen, wodurch der Flüssigkeitsstrom nicht unterbrochen wird.

Der vorliegenden Erfindung liegt die Aufgabe zugrunde, ein einfach aufgebautes Einwegventil anzugeben, das mit geringen Kosten herstellbar ist. Dabei soll das Einwegventil insbesondere zur Abgabe kleiner Mengen einer Behälterflüssigkeit geeignet sein, wie dies beispielsweise bei Augentropfen der Fall ist, ohne dass die Erfindung hierauf beschränkt ist.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass ein Ventilkörper aus einem elastisch verformbaren Material wie beispielsweise LLDPE, PUR, Silikon - ohne dass diese Aufzählung abschließend zu verstehen ist - zwischen dem Behälter und der Außenkappe angeordnet ist, dass sich der Ventilkörper über die Öffnung, vorzugsweise über die gesamte Öffnung des Behälterhalses erstreckt und einen vorzugsweise mittigen Vorsprung aufweist, der in den Austrittskanal der Außenkappe hineinragt und darin bezüglich seiner Längsachse hin und her beweglich angeordnet ist, dass ferner zwischen der Innenwand des Austrittskanals und dem Außenumfang des Vorsprungs ein Zwischenraum verbleibt, und dass wenigstens ein Schlitz die Wand des Ventilkörpers durchtrennt, durch den bei Ausübung eines Drucks auf den Behälter Flüssigkeit in den oben erwähnten Zwischenraum des Austrittskanals gelangt und aus dessen Öffnung austritt. Der wenigstens eine Schlitz öffnet sich bei Ausübung des Drucks auf den Behälter bzw. den Behälterinhalt, so dass die Flüssigkeit durch den Schlitz und damit durch den Ventilkörper hindurch treten kann, und der Schlitz schließt sich im drucklosen Zustand wieder infolge der Elastizität des Materials, aus dem der Ventilkörper besteht. Dabei ist dieses Prinzip auch zur Abgabe einer dickflüssigen oder cremigen Substanz geeignet, wobei die Länge des Schlitzes, der vorzugsweise entlang eines Kreisbogenabschnitts verläuft, auf die auszubringende Flüssigkeitsmenge und die Konsistenz des abzugebenden Behälterinhalts abzustimmen ist.

Gemäß der Erfindung begrenzt ein Anschlag den Vorschub des Vorsprungs in Richtung der Öffnung des Austrittskanals. Dieser Anschlag verhindert, dass Behälterflüssigkeit mit einem unerwünscht hohen Druck und/oder in unerwünscht großer Menge abgegeben wird, da der Vorsprung in einem solchen Fall an den Anschlag des Austrittskanals angedrückt wird und den Strom der Flüssigkeit zu der Austrittsöffnung der Außenkappe hin unterbricht. Dies wird in einer vorteilhaften Ausgestaltung der Erfindung dadurch bewerkstelligt, dass an dem Außenumfang des Vorsprungs ein ringförmiger Schulterabschnitt absteht, der dem rückwärtigen Randbereich des Austrittskanals der Außenkappe in dem drucklosen Ausgangszustand des Ventilkörpers mit Abstand gegenüber liegt. Durch geeignete Abmessungen kann mittels des Anschlags erreicht werden, dass jeweils nur ein Tropfen der Flüssigkeit abgegeben wird. Dies kann insbesondere bei einer Verwendung des Einwegventils bei einem Augentropfer wünschenswert sein.

Der wenigstens eine Schlitz durch die Wand des Ventilkörpers wird in einer bevorzugten Ausgestaltung der Erfindung vorzugsweise ohne Entfernen oder Wegschneiden eines Streifens des Ventilkörpers ausgeführt, obwohl auch dies im Rahmen der Erfindung liegt, wobei sich dann der "Schnitt" im drucklosen Zustand nicht vollständig schließen kann. Bevorzugt ist jedoch, dass ein Schnitt durch ein Messer, ohne Wegschneiden von Wandmaterial, erfolgt, wobei das Messer vorzugsweise querschnittlich eine Keilform hat. Dies kann - z.B. unter Einfluss von Wärme - so erfolgen, dass ein kleiner keilförmiger Eintrittsspalt für die Flüssigkeit verbleibt, während auf der Austrittsseite das Wandmaterial im drucklosen Zustand aneinander anliegt. Grundsätzlich kann der Schlitz z.B. auch durch einen Laser ausgebildet werden.

Der Ventilkörper kann beispielsweise in eine von dem Austrittskanal radial beabstandete Ringnut in der Unterseite der Außenkappe eingeclipst sein. Bevorzugt ist jedoch, dass der Ventilkörper mit seinem Randabschnitt auf dem Rand des Behälterhalses aufliegt und durch die auf den Behälterhals aufgeclipste oder aufgeschraubte Außenkappe fest eingeklemmt ist, so dass die Außenkappe durch den Ventilkörper gegenüber dem Behälterhals abgedichtet ist. Dies hat den Vorteil, dass keine gesonderte Dichtung erforderlich ist, so dass das Einwegventil nur aus zwei Bauteilen, nämlich der Außenkappe und dem Ventilkörper besteht. Das Einwegventil hat einen besonders einfachen Aufbau und ist mit geringen Kosten herstellbar.

Weiter ist mit Vorteil vorgesehen, dass der Vorsprung des Ventilkörpers, der bevorzugt eine im wesentlichen konisch sich verjüngende Stiftform hat, am oberen Endbereich eine umlaufende Dichtlippe aufweist, die in dem drucklosen Ausgangszustand des Ventilkörpers an einem Wandabschnitt des Austrittskanals dicht anliegt. Der Austrittskanal der Außenkappe verjüngt sich bevorzugt leicht konisch bis zu der Dichtlippe des Ventilkörpers, wobei sich dort eine konisch verbreiternde Schulter des Austrittskanals befinden kann, an der die entsprechend geformte Dichtlippe im drucklosen Ausgangszustand dicht anliegt. Der anschließende Endbereich des Austrittskanal kann sich zur Austrittsöffnung leicht konisch erweitern, um zwischen der Wand des Austrittsbereichs und dem Außenumfang der Dichtlippe beim Vorschub des Vorsprungs in den Austrittskanal einen kleinen Ringspalt zur Abgabe von Behälterflüssigkeit frei zu geben.

Der Ventilkörper ist in dem Ausgangszustand von der Oberkante der Außenkappe zurück versetzt, was den Vorteil hat, dass nach Abgabe von Behälterflüssigkeit im drucklosen Zustand ein an der Austrittsöffnung des Austrittskanals zurück gebliebener Tropfen durch den in die Ausgangslage zurück kehrenden Ventilkörper in den Endbereich des Austrittskanals eingesaugt wird. Hierdurch wird eine Verunreinigung der Außenkappe durch zurück gebliebene Flüssigkeit verhindert.

Der Vorsprung des Ventilkörpers ist bevorzugt hohl ausgebildet und dabei zum Inneren des Behälters hin offen, während der Vorsprung an der Seite der Austrittsöffnung natürlich geschlossen ist.

Das vorstehend beschriebene Einwegventil ist insbesondere für sogenannte Airless-Behälter geeignet, bei denen in einem Außenbehälter ein weicher Innenbeutel angeordnet ist, der sich bei der Abgabe von Behälterflüssigkeit zusammen zieht, ohne dass Umgebungsluft zum Druckausgleich in den Innenbeutel eintritt. Diese Umgebungsluft tritt vielmehr durch geeignete Löcher in dem Außenbehälter in den Zwischenraum zwischen dem weichen Innenbeutel und dem Außenbehälter ein. Bei einem solchen Airless-System sind keine Konservierungsmittel für den Behälterinhalt erforderlich.

Das erfindungsgemäße Einwegventil ist jedoch auch auf atmosphärisch belüftete, einfache Behälter anwendbar, in die nach Abgabe von Behälterflüssigkeit zum Druckausgleich Umgebungsluft eintritt. Hierzu wird vorgeschlagen, dass die Außenkappe wenigstens ein äußeres Belüftungsloch aufweist, und dass der Ventilkörper wenigstens einen weiteren Schlitz durch seine Wand aufweist, durch den die durch das äußere Belüftungsloch eintretende Luft ins Innere des Behälters eintreten kann. Hierzu ist in einer vorteilhaften Ausgestaltung vorgesehen, dass das äußere Belüftungsloch in einen zur Innenseite der Außenkappe offenen, ringförmigen Belüftungskanal führt, wobei der wenigstens eine weitere Schlitz an einer mit dem Belüftungskanal übereinstimmenden Stelle ausgebildet ist. Dieser wenigstens eine weitere Schlitz befindet sich vorteilhafterweise radial außerhalb des wenigstens einen anderen Schlitzes, durch den die Behälterflüssigkeit austritt.

Während durch den Schnitt oder Schlitz, durch den die Flüssigkeit durchtritt, keine Luft in umgekehrter Richtung durchtritt, weil sich ohne Ausübung von Druck auf den Behälterinhalt der Schnitt oder Schlitz vollkommen dicht schließt, kann durch den radial äußeren, anderen Schnitt bzw. Schlitz nur Luft von außen in den Innenraum des Behälters eintreten, jedoch keine Behälterflüssigkeit austreten. Diese Einweg-Schnitte können dadurch ausgebildet werden, dass mit einem Messer bevorzugt mit keilförmigem Querschnitt der radial innere Schnitt von Innen nach Außen, d.h. von der Behälterinnenseite aus ausgeführt wird, während der radial äußere Schnitt in entgegengesetzter Richtung, d.h. von außen nach innen ausgeführt wird. Dabei ist anzunehmen, dass infolge der Keilform des Messers an der Eintrittseite der Flüssigkeit bzw. der Luft ein sehr kleiner keilförmig sich schließender Spalt verbleibt, in den das Medium eintritt und - durch Überdruck oder Unterdruck - den Schnitt bzw. Schlitz öffnet.

Die Schlitze können durch einen ebenen Bereich des Ventilkörpers verlaufen. Bevorzugt ist jedoch, dass der radial innere Schlitz in einer bezüglich dem Innenraum des Behälters konvexen Wölbung, besonders bevorzugt an deren obersten Bereich erfolgt, während der Luftdurchtritts-Schlitz an einer umgekehrt gewölbten Stelle, d.h. an einer bezüglich des Behälterinneren konkaven Wölbung erfolgen sollte. Der Überdruck auf den Behälterinhalt führt dazu, dass sich der Schnitt bzw. Schlitz in dem konvex gewölbten Bereich öffnet, während der Schlitz an der Einbuchtung (vom Behälterinneren aus betrachtet) fest zusammen gedrückt wird. Wenn der Benutzer nach Abgabe von Flüssigkeit keinen Druck mehr auf den Behälter ausübt, bewirkt der Unterdruck in dem Behälter, dass sich der äußere Schlitz öffnet, während der radial innere Schlitz durch den Unterdruck zusammen gedrückt wird und keine Luft durchtreten lässt.

Der radial innere Schlitz öffnet sich auch dadurch, dass sich der Ventilkörper in diesem Bereich verformt, wenn der Ansatz in den Austrittskanal vorgeschoben wird. Deshalb kann der Schlitz auch an einer zum Behälter konkaven Einbuchtung ausgebildet sein.

Die Schlitze können nicht nur senkrecht durch die Wand des Ventilkörpers, sondern auch schräg ausgeführt werden.

Nach einem weiteren Vorschlag der Erfindung kann ein Luftfilter in der Außenkappe angeordnet werden, durch den die ins Innere des Behälter eintretende Luft hindurch geht. Wenn - wie dies bevorzugt ist - das äußere Belüftungsloch in einen ringförmigen Belüftungskanal führt, wird der Filter zweckmäßigerweise in diesem Kanal angeordnet.

Weiter wird vorgeschlagen, dass der Ventilkörper zwischen dem wenigstens einen radial inneren Schnitt bzw. Schlitz und dem wenigstens einen radial äußeren Schnitt bzw. Schlitz einen ringförmigen Vorsprung oder eine ringförmige Nut aufweist, der bzw. die in dichtem Eingriff mit einer entsprechenden Nut oder einem entsprechenden Vorsprung der Außenkappe steht. Damit ist der Bereich des Ventils, in dem die Flüssigkeit ausgebracht wird, dicht von dem Bereich getrennt, aus dem Luft zum Druckausgleich ins Innere des Behälters strömen kann. Damit ist sicher gestellt, dass keine Flüssigkeit zwischen dem Ventilkörper und der Außenkappe in den der Luft vorbehaltenen Bereich fließen und einen dort evtl. angeordneten Filter verunreinigen kann.

Wie bereits oben erwähnt, besteht das erfindungsgemäße Einwegventil praktisch nur aus einer Außenkappe, die beispielsweise aus pharmazeutisch zugelassenem PP oder Polyolefin hergestellt sein kann, und dem Ventilkörper, wenn von dem evtl. angeordneten Filter abgesehen wird. Die Erfindung kann in der Weise angewendet werden, dass für drei verschiedene Typen von Flüssigkeitsdosierern wie Augentropfer dieselbe Außenkappe und derselbe Ventilkörper verwendet werden, wobei bei dem letzteren im Falle eines Airless-Systems der wenigstens eine äußere Schnitt entfällt. Natürlich kann für das Airless-System statt dessen eine Außenkappe ohne Belüftungsloch und evtl. ringförmigen Belüftungskanal verwendet werden.

Weitere Einzelheiten der Erfindung ergeben sich aus der nachfolgenden Beschreibung bevorzugter Ausführungsformen eines Einwegventils sowie anhand der Zeichnung. Dabei zeigen:
- Figur 1 bis 3: eine erste Ausführungsform in drei verschiedenen Zuständen und
- Figur 4: eine zweite Ausführungsform der Erfindung.

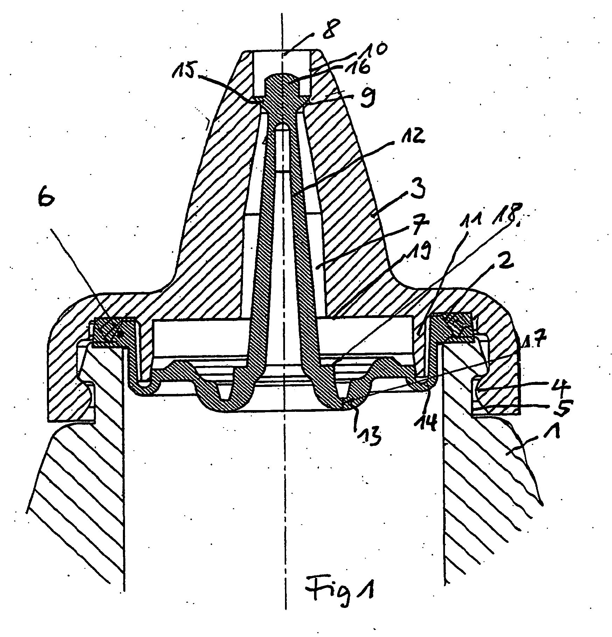

Die Figuren 1 bis 3 zeigen ein Einwegventil für einen Behälter eines Airless-Systems, bei dem nach Abgabe von Flüssigkeit aus dem Behälter keine Luft durch das Ventil zum Druckausgleich eintritt.

Auf dem oberen Rand eines Behälterhalses 1 ist ein umlaufender, verdickter wulstförmiger Rand 2 eines Ventilkörpers 6 angeordnet. Eine Außenkappe 3 aus einem harten Kunststoff ist auf den Behälterhals 1 aufgeclipst, wobei eine nach innen ragende Wölbung 4 am Rand der Außenkappe 3 in eine umlaufende Nut 5 des Behälterhalses 1 eingerastet ist. Dabei presst die Außenkappe 3 den wulstförmigen Rand 2 des Ventilkörpers 6 als Dichtung fest gegen den Behälterhals 1.

Die Außenkappe 3 enthält eine mittige Auslassbohrung 7, die querschnittlich kreisförmig ist und sich nach oben, d.h. zur Öffnung 8 hin zunächst konisch verjüngt, wobei im oberen Endbereich ein Wandabschnitt 9 als konisch sich verbreiternde Schulter 9 ausgebildet ist, an die sich ein erweiterter Endbereich 10 anschließt, der sich ebenfalls nach oben leicht konisch verbreitert.

Von der Unterseite der Außenkappe 3 steht ein ringförmiger Steg 11 nach unten ab, der mit radialem Abstand in den Behälterhals 1 eingreift und den wulstförmigen Rand 2 des Ventilkörpers 6 überdeckt. Der Ventilkörper 6 enthält einen mittigen Vorsprung 12, der nahezu bis zur Austrittsöffnung 8 in den Austrittskanal 7 der Außenkappe 3 hineinragt und einstückig über querschnittlich gewölbte Abschnitte 13 und 14 in den wulstförmigen Rand 2 übergeht. Der Vorsprung 12 ist nahezu bis zu einer oberen, nach außen abstehenden Dichtlippe 15 hohl ausgeführt. Oberhalb der Dichtlippe 15 befindet sich ein kurzer massiver Kopfabschnitt 16 des Ventilkörpers 6, der in dem in Figur 1 dargestellten drucklosen Ausgangszustand des Behälters von der Ebene der Austrittsöffnung 8 zurück gezogen ist.

Der Ventilkörper 6 hat eine kreisrunde Grundrissform, d.h. die Wölbungen 13 und 14 haben aus der Sicht des Behälters eine konkave Ringform. An der in den Figuren tiefsten Stelle der Wölbung 13 befindet sich ein in Umfangsrichtung kurzer Schlitz 17 durch die Wand des Ventilkörpers 6, wobei dieser Schlitz 17 sich nur über einen kurzen Kreisbogenabschnitt erstreckt. Bei einem Augentropfen-Fläschchen üblicher Größe dürfte der Schlitz einige Millimeter lang sein.

Der Vorsprung 12 des Ventilkörpers 6 hat eine horizontal nach außen abstehende, ringförmige Abdichtfläche 18, die einem Wandabschnitt 19 am Rand des Austrittskanals 7 der Außenkappe 3 in dem in Figur 1 dargestellten Ausgangszustand mit Abstand gegenüber liegt. In diesem Zustand liegt die obere Dichtlippe 15 dicht an der konischen Schulter 9 der Außenkappe 3 an.

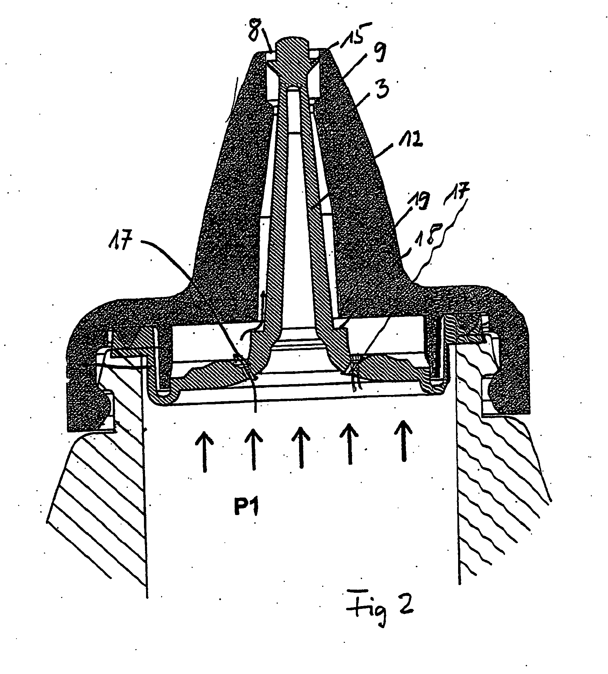

Figur 2 zeigt einen Zustand, in dem ein Druck P1 auf den Behälterinhalt ausgeübt wird, um Flüssigkeit aus dem Behälter abzugeben. Die Darstellung der Figur 2 unterscheidet sich zudem dadurch von derjenigen der Figur 1, dass zwei diametral gegenüber liegende Schnitte bzw. Schlitze 17 über eine kurze Länge den Ventilkörper 6 durchtrennen.

Durch die Ausübung des Drucks P1 wird der Vorsprung 12 des Ventilkörpers 6 weiter in die Außenkappe 3 hineingedrückt, so dass der obere Endabschnitt des Ventilkörpers 6 von der konischen Schulter 9 abhebt und die Austrittsöffnung 8 zur Abgabe von Flüssigkeit frei gibt. Die elastische Verformung des Ventilkörpers 6 beim Vorschub in der Außenkappe 3 trägt zusammen mit dem Druck der Flüssigkeit dazu bei, den Schlitz 17 bzw. die beiden Schlitze 17 zu öffnen, so dass Flüssigkeit durch den Ventilkörper 6 hindurch treten und durch den Austrittskanal 7 und dessen Öffnung 8 ausströmen kann. Dabei ist die Abdichtfläche 18 von dem gegenüberliegenden Wandabschnitt 19 der Außenkappe 3 beabstandet, wie Figur 2 zeigt.

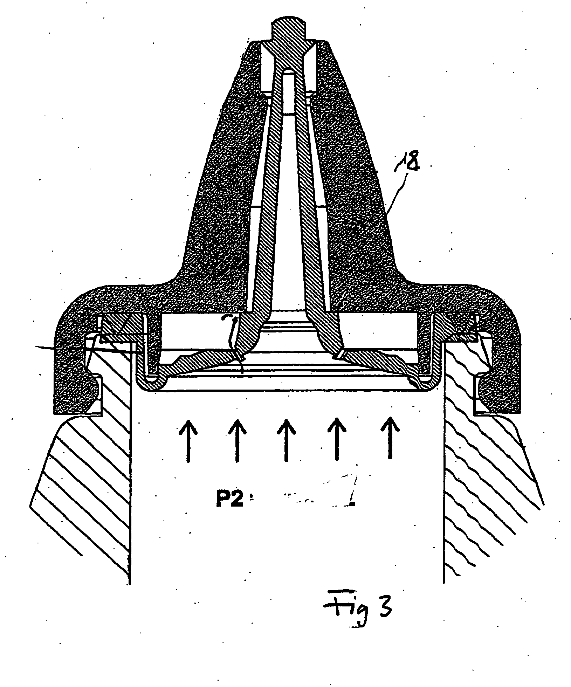

Wenn ein zu großer Druck P2 auf den Behälterinhalt ausgeübt wird, wie Figur 3 zeigt, wird der Ventilkörper 6 so weit vorgeschoben, dass die Dichtkante 18 an den gegenüberliegenden Wandabschnitt 19 angepresst wird, wodurch der Zwischenraum zwischen dem Vorsprung 12 des Ventilkörpers 6 und der Innenwand des Auslasskanals 7 der Außenkappe 3 abgedichtet wird. In diesem Zustand kann keine Flüssigkeit aus dem Behälter abgegeben werden.

Nach Freigabe des Behälters kehrt der Ventilkörper 6 selbsttätig wieder in die in Figur 1 dargestellte Lage zurück, in der der Schlitz 17 (Schlitze 17) geschlossen ist und die Dichtlippe 15 an dem konischen Wandabschnitt 9 anliegt.

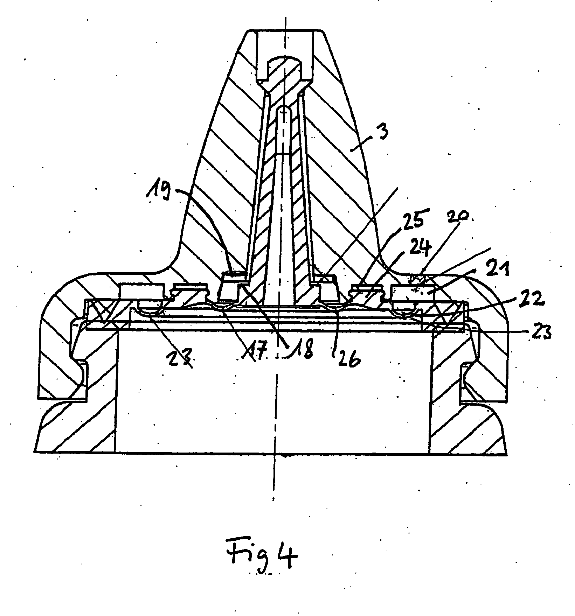

Figur 4 zeigt eine Ausführungsform des Einwegventils für einen einfachen Behälter, in den nach Abgabe von Behälterflüssigkeit Luft zum Druckausgleich eintritt. Hierzu enthält die Außenkappe 3 ein Belüftungsloch 20, das in einen ringförmigen Luftkanal 21 einmündet, der nach unten - d.h. zu dem Ventilkörper 6 hin - offen ist.

Unter dem Belüftungskanal 21 enthält der Ventilkörper 6 eine ringförmige, nach unten vorspringende Wölbung 22, durch deren tiefsten Punkt (querschnittlich betrachtet) ein weiterer Schlitz 23 verläuft, der die Wand des Ventilkörpers 6 durchtrennt. Durch diesen Schlitz 23 tritt nach Abgabe von Behälterinhalt Luft ins Innere des Behälters ein, während der Schlitz 23 bei Ausübung von Druck auf den Behälterinhalt zur Abgabe von Flüssigkeit dicht geschlossen bleibt.

In dem Belüftungskanal 21 ist im Bereich des Belüftungslochs 20 ein Luftfilter angeordnet, so dass nur sterile Luft ins Innere des Behälters gelangt.

Radial innerhalb der Wölbung 22 enthält der Ventilkörper 6 einen nach oben vorstehenden ringförmigen Vorsprung 24, der in eine entsprechende Ringnut 25 der Außenkappe 3 eingerastet ist. Es schließt sich radial innen ein weiterer gewölbter ringförmiger Bereich 26 des Ventilkörpers 6 an, der ebenfalls - wie dargestellt - entweder nach unten gewölbt ist oder eine entgegengesetzte Wölbung haben kann. Dieser Bereich 26 enthält den wenigstens einen Schlitz 17, durch den bei Ausübung von Druck auf den Behälterinhalt Behälterflüssigkeit austreten kann.

## Patentansprüche

1. Einwegventil zur Abgabe einer Flüssigkeit aus einem Behälter, mit einer Außenkappe, die an einem Behälterhals (1) befestigt ist und einen Austrittskanal (7) mit einer Austrittsöffnung für die Flüssigkeit aufweist, wobei ein Ventilkörper (6) mit einer Wand aus elastischem Material zwischen dem Behälter und der Außenkappe (3) angeordnet ist, und sich über die Öffnung des Behälterhalses (1) erstreckt und einen Vorsprung (12) aufweist, der in den Austrittskanal (7) der Außenkappe (3) hineinragt und darin hin und her beweglich angeordnet ist,
wobei ferner zwischen der Innenwand des Austrittskanals (7) und dem Außenumfang des Vorsprungs (12) ein Zwischenraum verbleibt, und die Wand des Ventilkörpers (6) wenigstens einen Schlitz (17) enthält, durch den bei Ausübung eines Drucks auf den Behälter Flüssigkeit in den Zwischenraum gelangt und die Flüssigkeit den Vorsprung (12) in dem Austrittskanal (7) vorschiebt, wobei
ein Anschlag (18,19) den Vorschub des Vorsprungs (12) in Richtung der Austrittsöffnung (8) des Austrittskanals begrenzt, **dadurch gekennzeichnet, dass** der gegen den Anschlag angedruckte Vorsprung (12) den Strom der Flüssigkeit zu der Austrittsöffnung (8) hin unterbricht.

2. Emwegventil nach Anspruch 1,
**dadurch gekennzeichnet,**
**dass** der Vorsprung (12) des Ventilkörpers (6) an einem oberen Endbereich eine umlaufende Dichtlippe (15) aufweist, die in einem drucklosen Ausgangszustand des Ventilkörpers (6) an einem Wandabschnitt (9) des Austrittskanals (7) dicht anliegt.

3. Einwegventil nach Anspruch 1 oder 2,
**dadurch gekennzeichnet,**
**dass** sich ein Endabschnitt (10) des Austrittskanals (7) zur Austrittsöffnung (8) hin konisch erweitert.

4. Einwegventil nach Anspruch 1,
**dadurch gekennzeichnet,**
**dass** der Vorsprung (12) an seinem Außenumfang einen ringförmigen Schulterabschnitt (18) aufweist, der einem rückwärtigen Randbereich (19) des Austrittskanals (7) der Außenkappe (3) in einem drucklosen Ausgangszustand des Ventilkörpers (6) mit Abstand gegenüber liegt.

5. Einwegventil nach einem Ansprüche 1 bis 4,
**dadurch gekennzeichnet,**
**dass** der Vorsprung (12) des Ventilkörpers 6 hohl ausgebildet ist.

6. Einwegventil nach einem der Ansprüche 1 bis 5,
**dadurch gekennzeichnet,**
**dass** die Außenkappe (3) wenigstens ein äußeres Belüftungsloch (20) aufweist, und dass der Ventilkörper (6) an wenigstens einer mit dem Belüftungsloch (20) in Verbindung stehenden Stelle wenigstens einen weiteren Schlitz (23) durch seine Wand aufweist.

7. Einwegventil nach Anspruch 6,
**dadurch gekennzeichnet,**
**dass** der wenigstens eine weitere Schlitz (23) radial außerhalb des wenigstens einen anderen Schlitzes (17) ausgebildet ist.

8. Einwegventil nach Anspruch 6,
**dadurch gekennzeichnet,**
**dass** das äußere Belüftungsloch (20) in einen zur Innenseite der Außenkappe (3) offenden, ringförmigen Belüftungskanal (21) führt, der von dem wenigstens einen weiteren Schlitz (23) überdeckt ist.

9. Einwegventil nach einem der Ansprüche 7 bis 8,
**dadurch gekennzeichnet,**
**dass** der Ventilkörper (6) zwischen dem wenigstens einen radial inneren Schlitz (17) und dem wenigstens einen radial äußeren Schlitz (23) einen ringförmigen Vorsprung (24) oder eine ringförmige Nut aufweist, der bzw. die in dichtem Eingriff mit einer entsprechenden Nut (25) oder Vorsprung der Außenkappe (3) steht.

10. Einwegventil nach einem der Ansprüche 8 bis 9,
**dadurch gekennzeichnet,**
**dass** in dem Belüftungskanal (21) im Bereich des Belüftungslochs (20) ein Luftfilter angeordnet ist.

11. Einwegventil nach einem der Ansprüche 6 bis 10,
**dadurch gekennzeichnet,**
**dass** der wenigstens eine Schlitz (17) zum Austritt der Flüssigkeit bzw. der wenigstens eine andere Schlitz (23) zum Eintritt der Luft in den Behälter an einem querschnittlich konvexen bzw. konkaven Wandbereich des Ventilkörpers (6) ausgebildet ist.

12. Einwegventil nach Anspruch 11,
**dadurch gekennzeichnet,**
**dass** der wenigstens eine Schlitz (17, 23) durch ein Messer ausgebildet ist.

13. Einwegventil nach Anspruch 12,
**dadurch gekennzeichnet,**
**dass** der Schlitz querschnittlich eine Keilform hat.

14. Einwegventil nach einem der Ansprüche 1 bis 13,
**dadurch gekennzeichnet,**
**dass** der Ventilkörper (6) einstückig ausgebildet ist und die Außenkappe (3) gegenüber dem Behälterhals abdichtet.

## Claims

1. A one-way valve for dispensing a liquid from a container with an outer cap, which is fastened to a container throat (1) and affords an outlet passage (7) with an outlet opening for the liquid, wherein a valve body (6) with a wall of elastic material is arranged between the container and the outer cap (3) and extends over the opening in the container throat (1) and has a projection (12), which projects into the outlet passage (7) in the outer cap (3) and is arranged to be movable back and forth therein, wherein further a gap remains between the inner wall of the outlet passage (7) and the outer periphery of the projection (12) and the wall of the valve body (6) includes at least one slit (17), through which liquid flows into the gap when a pressure is exerted onto the container and the liquid advances the projection (12) in the outlet passage (7), wherein an abutment (18, 19) limits the advance of the projection (12) in the direction of the outlet opening (8) in the outlet passage, **characterised in that** the projection (12) pressed towards the abutment interrupts the flow of the liquid to the outlet opening (8).

2. A one-way valve as claimed in claim 1, **characterised in that** on an upper end region the projection (12) of the valve body (6) has a periphal sealing lip (15), which, in an unpressurised initial state of the valve body (6), sealingly engages a wall section (9) of the outlet passage (7).

3. A one-way valve as claimed in claim 1 or 2, **characterised in that** an end section (10) of the outlet passage (7) broadens conically towards the outlet opening (8).

4. A one-way valve as claimed in claim 1, **characterised in that** on its outer periphery the projection (12) has an annular shoulder section (18), which is opposed to and spaced from a rear edge region (19) of the outlet passage (7) in the outer cap (3) in an unpressurised initial state of the valve body (6).

5. A one-way valve as claimed in one of claims 1 to 4, **characterised in that** the projection (12) of the valve body (6) is of hollow construction.

6. A one-way valve as claimed in one of claims 1 ot 5, **characterised in that** the outer cap (3) has at least one outer aeration hole (20) and the valve body (6) has at least one further slit (23) through its wall at at least one position communicating with the aeration hole (20).

7. A one-way valve as claimed in claim 6, **characterised in that** the at least one further slit (23) is formed radially outside the at least one other slit (17).

8. A one-way valve as claimed in claim 6, **characterised in that** the outer aeration hole (20) leads into an annular aeration passage (21), which is open to the inner surface of the outer cap (3) and which is overlapped by the at least one further slit (23).

9. A one-way valve as claimed in one of claims 7 to 8, **characterised in that** between the at least one radially inner slit (17) and the at least one radially outer slit (23) the valve body (6) has an annular projection (24) or an annular groove, which is in sealed engagement with a corresponding groove (25) or projection on the outer cap (3).

10. A one-way valve as claimed in one of claims 8 to 9, **characterised in that** an air filter is arranged in the aeration passage (21) in the vicinity of the aeration hole (20).

11. A one-way valve as claimed in one of claims 6 to 10, **characterised in that** the at least one slit (17) for the outflow of the liquid or the at least one other slit (23) for the inflow of air into the container is formed in a wall region of the valve body (6) which is of convex or concave cross section.

12. A one-way valve as claimed in claim 11, **characterised in that** the at least one slit (17, 23) is formed by a knife.

13. A one-way valve as claimed in claim 12, **characterised in that** the slit has a wedge shape in cross section.

14. A one-way valve as claimed in one of claims 1 to 13, **characterised in that** the valve body (6) is of one-piece construction and the outer cap (3) forms a seal with respect to the container throat.

## Revendications

1. Soupape unidirectionnelle servant à distribuer un liquide en provenance d'un récipient, comprenant un capuchon externe, qui est fixé au niveau d'un goulot de récipient (1) et qui présente un canal de sortie (7) doté d'un orifice de sortie pour le liquide, sachant qu'un corps de soupape (6) doté d'une paroi constituée d'un matériau élastique est disposé entre le récipient et le capuchon extérieur (3), qu'il s'étend au-dessus de l'orifice du goulot du récipient (1) et présente une partie faisant saillie (12), qui dépasse dans le canal de sortie (7) du capuchon extérieur (3) et qui est disposée dans ce dernier de manière mobile en effectuant des mouvements de va-et-vient,
sachant qu'en outre un espace intermédiaire subsiste entre la paroi intérieure du canal de sortie (7) et la périphérie extérieure de la partie faisant saillie (12), et sachant que la paroi du corps de soupape (6) contient au moins une fente (17), à travers laquelle, en exerçant une pression sur le récipient, du liquide parvient dans l'espace intermédiaire, le liquide poussant la partie faisant saillie (12) dans le canal de sortie (7), sachant qu'une butée (18, 19) délimite l'avancée de la partie faisant saillie (12) dans la direction de l'orifice de sortie (8) du canal de sortie, **caractérisée en ce que** la partie faisant saillie (12) pressée contre la butée interrompt le flux de liquide en direction de l'orifice de sortie (8).

2. Soupape unidirectionnelle selon la revendication 1,
**caractérisée en ce**
**que** la partie faisant saillie (12) du corps de soupape (6) présente au niveau d'une zone d'extrémité supérieure une lèvre d'étanchéité (15) périphérique, qui repose de manière étanche contre la section de paroi (9) du canal de sortie (7) lorsque le corps de soupape (6) se trouve dans un état initial sans pression.

3. Soupape unidirectionnelle selon la revendication 1 ou 2,
**caractérisée en ce**
**qu'**une section d'extrémité (10) du canal de sortie (7) s'étend de manière conique en direction de l'orifice de sortie (8).

4. Soupape unidirectionnelle selon la revendication 1,
**caractérisée en ce**
**que** la partie faisant saillie (12) présente au niveau de sa périphérie extérieure une section d'épaulement (18) annulaire, qui fait face de manière espacée à une zone de bord (19) arrière du canal de sortie (7) du capuchon extérieur (3) lorsque le corps de soupape (6) se trouve dans un état initial sans pression.

5. Soupape unidirectionnelle selon l'une quelconque des revendications 1 à 4,
**caractérisée en ce**
**que** la partie faisant saillie (12) du corps de soupape (6) est réalisée de manière creuse.

6. Soupape unidirectionnelle selon l'une quelconque des revendications 1 à 5,
**caractérisée en ce**
**que** le capuchon extérieur (3) présente au moins un trou d'aération extérieur (20), et en ce que le corps de soupape (6) présente au moins une autre fente (23) à travers sa paroi en au moins un endroit se trouvant en lien avec le trou d'aération (20).

7. Soupape unidirectionnelle selon la revendication 6,
**caractérisée en ce**
**que** la fente supplémentaire (23) au moins au nombre de une est réalisée de manière radiale à l'extérieur de l'autre fente (17) au moins au nombre de une.

8. Soupape unidirectionnelle selon la revendication 6,
**caractérisée en ce**
**que** le trou d'aération (20) extérieur mène dans un canal d'aération (21) annulaire ouvert en direction du côté intérieur du capuchon extérieur (3), lequel canal d'aération est recouvert par la fente supplémentaire (23) au moins au nombre de une.

9. Soupape unidirectionnelle selon l'une quelconque des revendications 7 à 8,
**caractérisée en ce**
**que** le corps de soupape (6) présente entre la fente (17) radialement intérieure au moins au nombre de une et la fente (23) radialement extérieure au moins au nombre de une, une partie faisant saillie annulaire (24) ou une rainure annulaire, laquelle est en prise de manière étanche avec une rainure (25) correspondante ou une partie faisant saillie du capuchon extérieur (3).

10. Soupape unidirectionnelle selon l'une quelconque des revendications 8 à 9,
**caractérisée en ce**
**qu'**un filtre à air est disposé dans le canal d'aération (21) dans la zone du trou d'aération (20).

11. Soupape unidirectionnelle selon l'une quelconque des revendications 6 à 10,
**caractérisée en ce**
**que** la fente (17) au moins au nombre de une destinée à la sortie du liquide ou l'autre fente (23) au moins au nombre de une destinée à l'entrée de l' air dans le récipient sont réalisées au niveau d'une zone de paroi du corps de soupape (6) présentant une section transversale convexe ou concave.

12. Soupape unidirectionnelle selon la revendication 11,
**caractérisée en ce**
**que** la fente (17, 23) au moins au nombre de une est réalisée par un couteau.

13. Soupape unidirectionnelle selon la revendication 12,
**caractérisée en ce**
**que** la fente présente une section transversale cunéiforme.

14. Soupape unidirectionnelle selon l'une quelconque des revendications 1 à 13,
**caractérisée en ce**
**que** le corps de soupape (6) est réalisé d'un seul tenant et étanchéifie le capuchon externe (3) par rapport au goulot du récipient.
